# EUROPÄISCHE PATENTSCHRIFT

(11) **EP 0 897 736 B1**
(45) Veröffentlichungstag und Bekanntmachung des Hinweises auf die Patenterteilung: **24.01.2001**
(21) Anmeldenummer: 98114638.4
(22) Anmeldetag: 04.08.1998
(51) Int. Cl.: B01D 25/12

(54) **Pressengestell für eine Filterpresse sowie Verfahren zum Zusammenbauen des Pressengestells**
Frame for supporting a filter press and method for assembling this frame
Support pour filtre-presse et procédé d'assemblage du support

(30) Priorität: 12.08.1997 DE 19734886
(43) Veröffentlichungstag der Anmeldung: 24.02.1999
(73) Patentinhaber: Erich Netzsch GmbH & Co. Holding KG, D-95100 Selb (DE)
(72) Erfinder: Berghaus, Michael, 95100 Selb (DE); Lange, Klaus Jürgen, 95100 Selb (DE); Lotter, Frank, 95615 Marktredwitz (DE); Tröger, Gerhard, 95030 Hof (DE)
(74) Vertreter: Goetz, Rupert, Dipl.-Ing.

(56) Entgegenhaltungen:
- GB-A- 104 673
- US-A- 4 756 817

## Beschreibung

Die Erfindung betrifft ein Pressengestell nach dem Oberbegriff des Anspruchs 1 sowie ein Verfahren zum Zusammenbauen eines Pressengestells nach dem Oberbegriff des Anspruchs 5.

Pressengestelle für Filterpressen haben üblicherweise zwei Ständer, die durch einen auf ihnen ruhenden Oberholm oder ein Paar Oberholme oder durch ein Paar weiter unten, ungefähr auf halber Höhe der Ständer seitlich angeordnete Seitenholme miteinander verbunden sind. An dem Holm oder Paar Holme sind Filterplatten derart verschiebbar geführt, daß sie zwischen einer Betriebsstellung, in der sie zu einem Filterplattenpaket zusammengespannt sind, und einer Entleerungsstellung, in der sie Zwischenräume zwischen sich freilassen, verschiebbar sind. Bei jedem Betriebszyklus bilden sich zwischen den Filterplatten Filterkuchen, die anschließend, in der Entleerungsstellung, zwischen den Filterplatten herausfallen; etwa hängenbleibende Filterkuchenreste können mit einer Rüttel- und/oder Waschvorrichtung von den Filterplatten entfernt werden. Geschieht dies nicht vollständig, so können bei erneutem Zusammenspannen der Filterplatten asymmetrische Reaktionskräfte auftreten, die örtliche Überbeanspruchungen des Pressengestells zur Folge haben, wenn die Ständer mit dem Holm oder Paar Holme starr verbunden sind. Solche Überbeanspruchungen lassen sich bekanntermaßen dadurch vermeiden, daß die Ständer mit dem Holm oder Paar Holme durch je einen Bolzen gelenkig verbunden sind.

Eine entsprechende Vorrichtung ist aus US-A-4,756,817 bekannt.

Filterpressen, die beispielsweise zum Entwässern von Klärschlamm in kommunalen oder industriellen Abwasserkläranlagen verwendet werden, können mehrere Meter hoch sein und eine Länge haben, die ein Mehrfaches ihrer Höhe beträgt. Bei der Montage des Pressengestells einer solchen Filterpresse werden zunächst die beiden Ständer aufgestellt und durch meist in Bodennähe angeordnete Zuganker miteinander verbunden. Sodann wird der Holm oder das Paar Holme auf die Ständer aufgesetzt oder an deren Seiten angeordnet. Anschließend sind die gelenkigen Verbindungen zwischen den Ständern und dem Holm bzw. Paar Holme herzustellen. Dabei kann es infolge von Herstellungs- oder Montagetoleranzen der Ständer sowie infolge von Herstellungstoleranzen, Wärmedehnungen und Verwindungen des Holms oder der Holme schwierig sein, zusammengehörige Löcher in den Ständern und Holmenden so genau miteinander in Fluchtung zu bringen, daß die Bolzen sich einschieben lassen.

Der Erfindung liegt die Aufgabe zugrunde, solche Schwierigkeiten zu vermeiden, den Zusammenbau eines gattungsgemäßen Pressengestells also zu erleichtern.

Die Aufgabe ist, soweit sie sich auf ein Pressengestell bezieht, mit den Merkmalen des Anspruchs 1 und, soweit sie sich auf das Zusammenbauen des Pressengestells bezieht, mit den Merkmalen des Anspruchs 5 gelöst.

Vorteilhafte Weiterbildungen ergeben sich aus den Unteransprüchen.

Ausführungsbeispiele der Erfindung werden im folgenden anhand schematischer Zeichnungen mit weiteren Einzelheiten erläutert. Es zeigen:
- Fig.1: einen Endbereich eines Pressengestells in Seitenansicht,
- Fig.2: die zugehörige Stirnansicht, teilweise als senkrechter Schnitt II-II in Fig.1 gezeichnet,
- Fig.3: den waagerechten Teilschnitt III-III in Fig.1, stark vergrößert,
- Fig.4: eine der Fig.2 entsprechende Stirnansicht eines weiteren Pressengestells und
- Fig.5: einen stark vergrößerten Ausschnitt aus Fig.4.

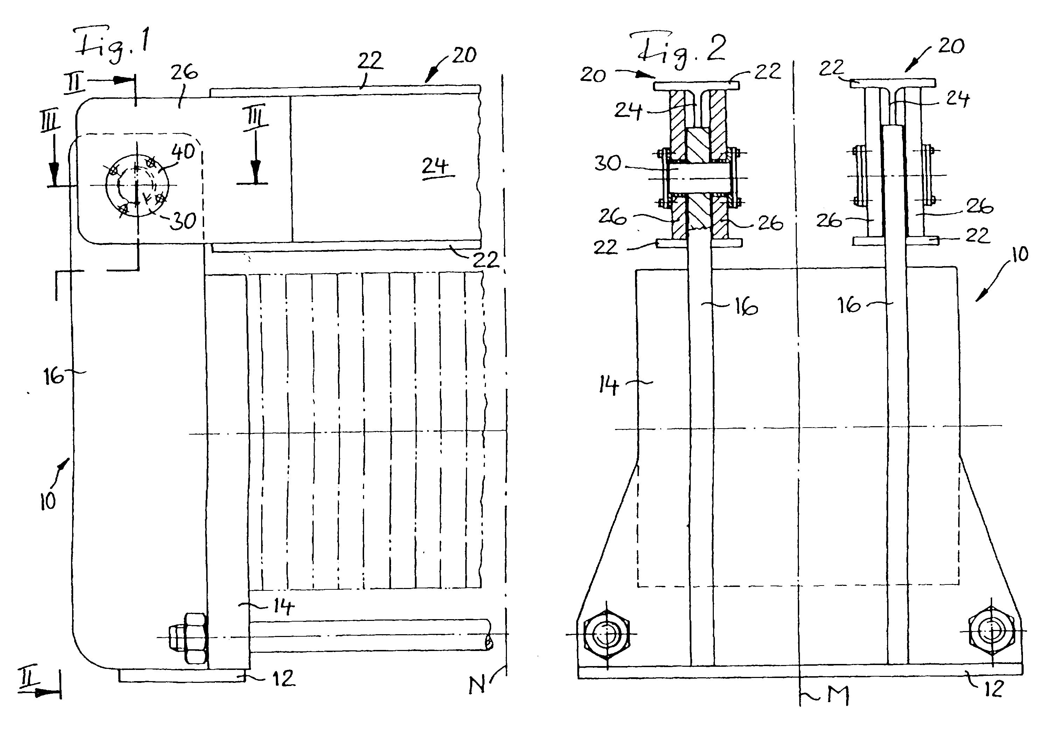

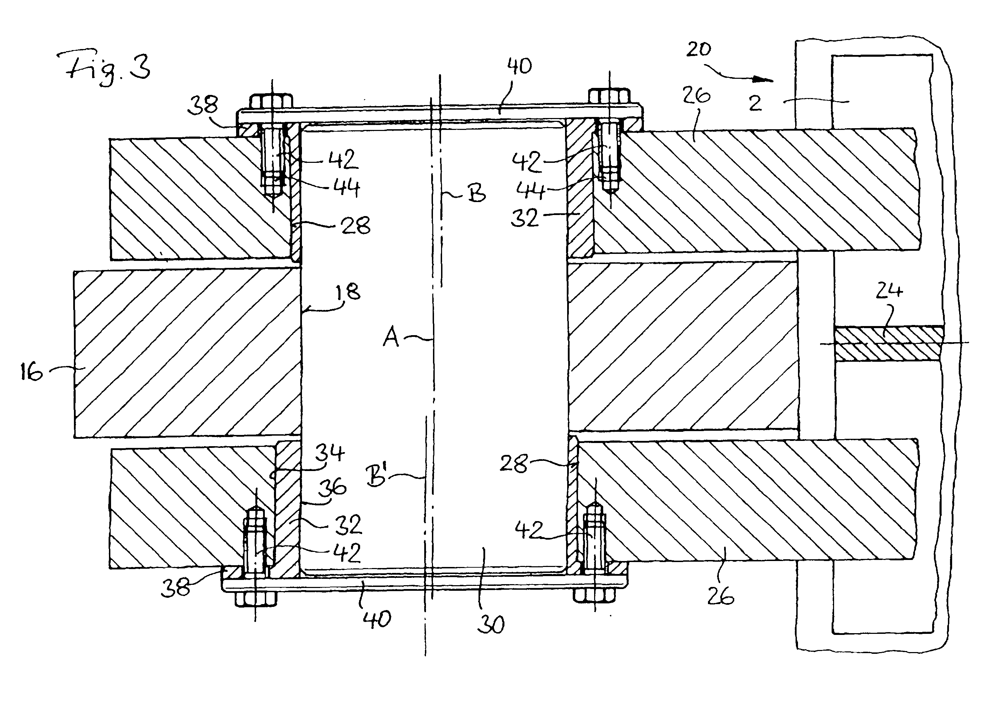

Das in Fig.1 bis 3 teilweise dargestellte Pressengestell ist symmetrisch in bezug auf eine senkrechte Längsmittelebene M und auch im wesentlichen symmetrisch in bezug auf eine zu dieser Längsmittelebene normale, ebenfalls senkrechte Normalebene N. Es genügt deshalb, den in Fig.1 linken Endbereich des Pressengestells darzustellen; der rechte Endbereich ist in allen hier interessierenden Einzelheiten identisch.

Zu jedem Endbereich des Pressengestells gehört ein Ständer 10 mit einer waagerechten Basisplatte 12, einer zur Normalebene N parallelen Druckplatte 14 und einem Paar zur Längsmittelebene M parallele Befestigungsplatten 16, die mit der Basisplatte 12 und der Druckplatte 14 verschweißt oder einstückig gegossen sind, sich über die Druckplatte 14 hinaus nach oben erstrecken und nahe ihrem oberen Ende je eine zur Längsmittelebene M normale, also waagerechte, Bohrung 18 aufweisen.

Auf den beiden Ständern 10 ruht ein Paar Holme 20, die symmetrisch zur Längsmittelebene M im wesentlichen waagerecht angeordnet sind. Jeder Holm 20 ist im dargestellten Beispiel gebildet von einem handelsüblichen Doppel-T-Träger (I-Träger), der ein Paar waagerechte Flansche 22 sowie einen senkrechten Steg 24 aufweist, und an dessen beiden Enden je ein Paar Endplatten 26 angeschweißt ist, die symmetrisch zum Steg 24 in je einer zu diesem parallelen senkrechten Ebene liegen und sich in Längsrichtung des Holms 20 über die Flansche 22 und den Steg 24 hinauserstrecken. Die Endplatten 26 an jedem Ende des Holms 20 sind so angeordnet, daß sie die Befestigungsplatte 16 des zugehörigen Ständers 10 mit einem gewissen, in Fig.3 übertrieben groß dargestellten Spiel zwischen sich aufnehmen.

Jede der Endplatten 26 hat eine waagerechte Bohrung 28. Es wird angestrebt, daß diese Bohrungen 28 miteinander gleichachsig sind und bei der Montage des Pressengestells in eine Lage gebracht werden, in der sie mit der Bohrung 18 der zugehörigen Befestigungsplatte 16 gleichachsig sind. In der Praxis muß jedoch aus den eingangs erwähnten Gründen damit gerechnet werden, daß es nicht ohne besondere Anstrengungen gelingt, die Endplatten 26 in bezug zur zugehörigen Befestigungsplatte 16 in eine Stellung zu bringen, in der die in Fig.3 mit A bezeichnete Achse der Bohrung 18 und die mit B bzw. B' bezeichneten Achsen der beiden zugehörigen Bohrungen 28 genau miteinander fluchten.

Es ist vorgesehen, daß jede der Befestigungsplatten 16 mit dem zugehörigen Paar Endplatten 26 durch einen zylindrischen Bolzen 30 verbunden wird, der ohne nennenswertes Spiel oder sogar mit einem Pressitz in der Bohrung 18 der Befestigungsplatte 16 steckt, und dessen Endbereiche in je einer Bohrung 28 der zugehörigen Endplatten 26 aufgenommen sind. Hätten diese Bohrungen 28 der Endplatten 26, wie bisher üblich, den gleichen Durchmesser wie die Bohrung 18 der Befestigungsplatte 16, so ließe sich der Bolzen 30 erst dann einschieben, wenn durch besonders genaues Justieren der Ständer 10 und ggf. durch Biegen der Endplatten 26 und/oder Verwinden des Holms 20 mittels besonderer Montagevorrichtungen die Achsen B und B' mit der Achse A in Fluchtung gebracht worden sind.

Um solche unter Umständen sehr zeitraubende Maßnahmen zu vermeiden, sind gemäß Fig.3 die Bohrungen 28 der Endplatten 26 mit einem merklich größeren Durchmesser ausgeführt als die Bohrung 18 in der Befestigungsplatte 16. Infolgedessen läßt sich der Bolzen 30 ungeachtet der beschriebenen Ungenauigkeiten berührungsfrei durch die Bohrung 28 einer der beiden Endplatten 26 hindurch in die Bohrung 18 der zugehörigen Befestigungsplatte 16 ein- und durch sie hindurchschieben, so daß der Bolzen schließlich in die Bohrung 28 der gegenüberliegenden Endplatte 26 wiederum berührungsfrei hineinragt. Auf diese Weise entstehen zwischen den Endabschnitten des Bolzens 30 und den Leibungen der Bohrungen 28 in den beiden Endplatten 26 Ringräume, die wegen des - in Fig.3 übertrieben dargestellten - Versatzes zwischen der Achse A und jeder der beiden Achsen B und B' exzentrisch sind.

In jeden dieser Ringräume wird anschließend eine Büchse 32 eingesetzt, die eine zylindrische Außenfläche 34, eine ebenfalls zylindrische, jedoch gegenüber der Außenfläche exzentrische Innenfläche 36 sowie einen radial nach außen ragenden Flansch 38 aufweist. Jede dieser Büchsen 32 läßt sich um die Achse B bzw. B' der zugehörigen Bohrung 28 derart drehen, daß sie sich ohne allzugroßen Kraftaufwand in die zugehörige Bohrung 28 einschieben läßt. Wenn mit stark unterschiedlichen Exzentrizitäten gerechnet werden muß, bedeutet es einen im Vergleich zum bisher erforderlichen Montageaufwand geringen Aufwand, Büchsen 32 von unterschiedlicher Exzentrizität bereitzuhalten.

Die Büchsen 32 haben ihre endgültige Stellung erreicht, wenn ihr Flansch 38 an der Außenfläche der zugehörigen Endplatte 26 anliegt. In dieser Stellung wird jede der Büchsen 32 mit Befestigungsmitteln gesichert, die im dargestellten Beispiel aus einem Deckel 40 und vier Schrauben 42 für jede Büchse 32 bestehen. Der Deckel 40 hat nahe seinem Rand für jede der zugehörigen Schrauben 42 ein achsparalleles Loch. Ausgehend von diesen Löchern wird der Flansch 38 der zugehörigen Büchse 32 durchbohrt und werden Gewindelöcher 44 in der zugehörigen Endplatte 26 hergestellt, in die dann die Schrauben 42 eingeschraubt werden.

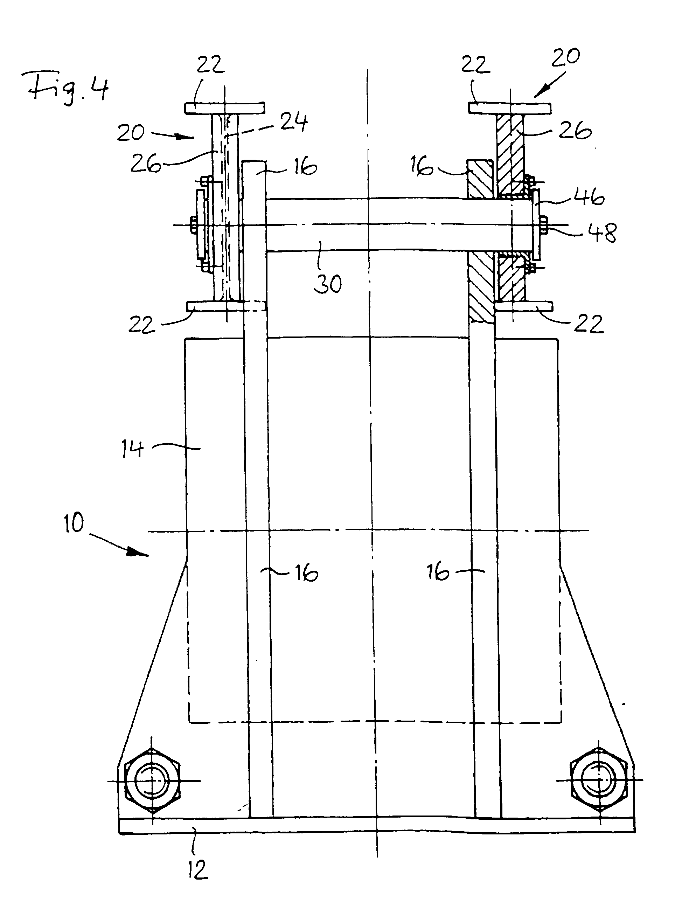

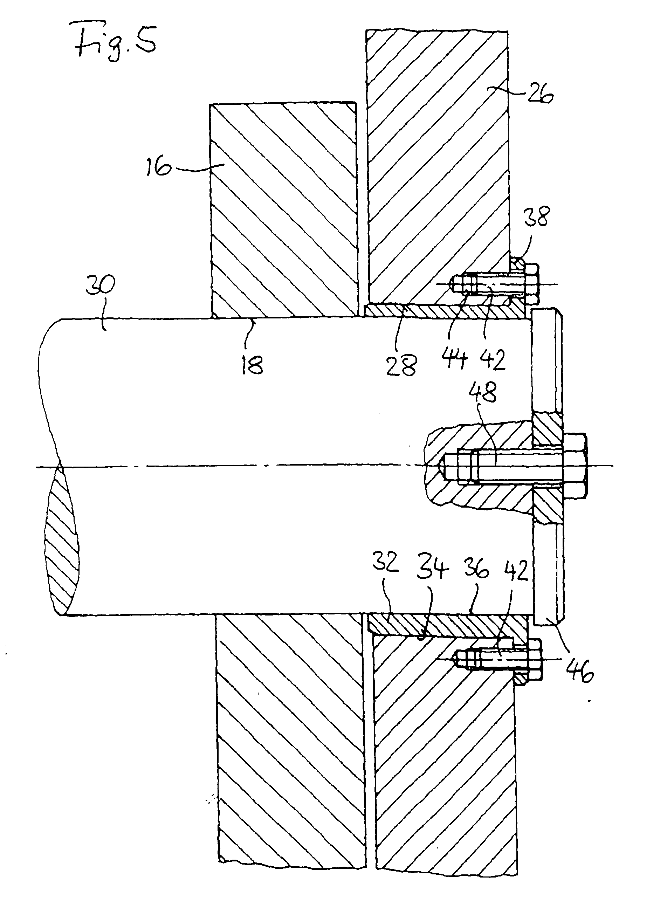

Das Ausführungsbeispiel gemäß Fig.4 und 5 unterscheidet sich von dem in Fig.1 bis 3 dargestellten dadurch, daß an beiden Enden jedes der beiden Holme 20 nur je eine Endplatte 26 vorgesehen und in bezug auf den Holm mittig angeordnet ist, so daß sie eine Fortsetzung des Steges 24 bildet; die Endplatte 26 ist jedoch erheblich dicker als der Steg 24. Ein weiterer Unterschied besteht darin, daß jeder Ständer 10 mit den zugehörigen Endplatten 26 beider Holme 20 durch einen gemeinsamen, entsprechend kräftiger bemessenen Bolzen 30 verbunden ist. Dieser Bolzen 30 erstreckt sich durch beide Befestigungsplatten 16 des Ständers 10 hindurch und kann mit ihnen verschweißt sein. Die zugehörigen Endplatten 26 der beiden Holme 20 werden bei der Montage zunächst ohne die zugehörigen Büchsen 32 auf je ein Ende des Bolzens 30 aufgesteckt und anschließend wird auf die Enden des Bolzens 30 in der beschriebenen Weise je eine exzentrische Büchse 32 aufgesteckt und dabei in die Bohrung 28 der zugehörigen Endplatte 26 eingeschoben und schließlich an dieser befestigt.

Gemäß Fig.4 und 5 erstrecken sich die Schrauben 42 nur durch den Flansch 38 der Büchse 32 hindurch. Als Sicherung gegen unbeabsichtigtes Lösen der Holme 20 vom Bolzen 30 ist an dessen Stirnflächen je eine Stirnplatte 46, die den Flansch 38 der zugehörigen Büchse 32 übergreift, mit einer zentralen Schraube 48 befestigt.

Die Montage läßt sich mit Büchsen 32, die erst am Schluß auf den zugehörigen Bolzen 30 aufgesteckt werden, auch dann erheblich erleichtern, wenn die Büchsen nicht exzentrisch sind sondern konzentrische Innen- und Außenflächen haben. In jedem Fall wird nämlich durch Verwendung solcher Büchsen erreicht, daß jeder Bolzen 30 in einen Teil der ihm zugeordneten Bohrungen, in beiden dargestellten Beispielen sind es die Bohrungen 28 in den Endplatten 26, berührungsfrei und somit von Achsfluchtungsfehlern unbehindert, eingeschoben werden kann. Büchsen ohne Exzentrizität lassen sich dann unschwer einsetzen, wenn sie entsprechend dünnwandig sind. Die dabei unverändert bleibenden Fluchtungsfehler zwischen den Achsen A, B und B' können in vielen Fällen hingenommen werden. Wenn dies nicht der Fall ist, so können die Achsfluchtungsfehler nach dem beschriebenen Einsetzen der Bolzen 30 jedenfalls leichter beseitigt werden als vorher.

## Patentansprüche

1. Pressengestell für eine Filterpresse mit
- zwei Ständern (10), die an je einem Ende des Pressengestells angeordnet sind und je mindestens eine in einer senkrechten Längsebene des Pressengestells angeordnete Befestigungsplatte (16) aufweisen,
- mindestens einem Holm (20), der sich im wesentlichen waagerecht in Längsrichtung des Pressengestells zwischen den beiden Ständern (10) erstreckt und an seinen beiden Enden je mindestens eine Endplatte (26) aufweist, die sich mit der Befestigungsplatte (16) des benachbarten Ständers (10) überlappt, und
- je einem Bolzen (30) an beiden Enden des Holms (20), der in Bohrungen (18, 28) in den einander überlappenden Befestigungs- und Endplatten (16, 26) aufgenommen ist und diese Platten gelenkig miteinander verbindet,
dadurch gekennzeichnet, daß die Bohrung (28) mindestens einer der einander überlappenden Platten (26) eine Büchse (32) enthält, die auf den Bolzen (30) nach dessen Montage aufgesteckt ist.

2. Pressengestell nach Anspruch 1,
dadurch gekennzeichnet, daß die Büchse (32) eine Exzenterbüchse ist.

3. Pressengestell nach Anspruch 2,
dadurch gekennzeichnet, daß die Büchse (32) einen Flansch (38) aufweist, an dem sich ein Werkzeug zum Drehen der Büchse ansetzen und ein Befestigungsmittel anbringen läßt, um die Büchse in einer gewählten Drehwinkelstellung an der sie aufnehmenden Platte (26) zu befestigen.

4. Pressengestell nach einem der Ansprüche 1 bis 3,
dadurch gekennzeichnet, daß die Büchse (32) mit einem Deckel (40) abgedeckt ist.

5. Verfahren zum Zusammenbauen eines Pressengestells für eine Filterpresse mit
- zwei Ständern (10) die an je einem Ende des Pressengestells angeordnet sind und je mindestens eine in einer senkrechten Längsebene des Pressengestells angeordnete Befestigungsplatte (16) aufweisen,
- mindestens einem Holm (20), der sich im wesentlichen waagerecht in Längsrichtung des Pressengestells zwischen den beiden Ständern (10) erstreckt und an seinen beiden Enden je mindestens eine Endplatte (26) aufweist, die sich mit der Befestigungsplatte (16) des benachbarten Ständers (10) überlappt, und
- je einem Bolzen (30) an beiden Enden des Holms (20), der in Bohrungen (18, 28) in den einander überlappenden Befestigungs- und Endplatten (16, 26) aufgenommen ist und diese Platten gelenkig miteinander verbindet,
- wobei die Befestigungsplatten (16) der beiden Ständer (10) und die zugehörigen Endplatten (26) des Holms (20) in ihre überlappende Stellung gebracht werden, in der ihre Bohrungen miteinander fluchten,
dadurch gekennzeichnet, daß
- die Bolzen (30) durch die zugehörigen Bohrungen (18, 28), darunter mindestens eine zum Aufnehmen einer Büchse (32) vorgesehene Bohrung (28) hindurchgeführt werden, ohne daß die Büchse (32) in diese Bohrung (28) eingesetzt worden ist, und
- die Büchsen (32) erst anschließend auf die Bolzen (30) aufgesteckt und dabei in die jeweils zugehörige Bohrung (28) eingeschoben werden.

## Claims

1. A press support frame for a filter press, comprising
- two stanchions (10) which are arranged on one end each of the press support and are provided with at least one mounting plate (16) arranged in a vertical longitudinal plane of the press support,
- at least one crossbeam (20) which extends substantially horizontally in the longitudinal direction of the press support between the two stanchions (10) and includes at its both ends at least one end plate (26) each which overlaps with the mounting plate (16) of the adjacent stanchion (10), and
- a pin (30) each on either end of the crossbeam (20) which pins are received in bores (18, 28) in the mounting and end plates (16, 26) overlapping each other and interconnect said plates in an articulated manner,
characterised in that the bore (28) in at least one of the plates (26) overlapping each other contains a case (32) that is placed over the bolt (30) after the latter is mounted.

2. The press support frame according to claim 1,
characterised in that the case (32) is an eccentric case.

3. The press support frame according to claim 2,
characterised in that the case (32) is provided with a flange (38) which is adapted for a tool for turning the case and for mounting means to be applied to mount the case in a chosen angle of rotation position to the plate (26) receiving it.

4. The press support frame according to one of claims 1 to 3,
characterised in that the case (32) is covered by a lid (40).

5. A method of assembling a press support frame for a filter press, comprising
- two stanchions (10) which are arranged on one end each of the press support and are provided with at least one mounting plate (16) arranged in a vertical longitudinal plane of the press support,
- at least one crossbeam (20) which extends substantially horizontally in the longitudinal direction of the press support between the two stanchions (10) and includes at its both ends at least one end plate (26) each which overlaps with the mounting plate (16) of the adjacent stanchion (10), and
- a pin (30) each on either end of the crossbeam (20) which pins are received in bores (18, 28) in the mounting and end plates (16, 26) overlapping each other and interconnect said plates in an articulated manner,
- the mounting plates (16) of the two stanchions (10) and the associated end plates (26) of the crossbeam (20) being brought into their overlapping position in which their bores are in alignment,
characterised in that
- the pins (30) are passed through the associated bores (18, 28), among them at least one bore (28) provided for receiving a case (32), without the case (32) having been inserted in said bore (28), and
- a cases (32) are placed over the pins (30) only subsequently and at the same time pushed into the respective bore (28).

## Revendications

1. Châssis pour un filtre-presse, comprenant :
- deux montants (10), lesquels sont agencés à une extrémité respective du châssis de presse, et présentent chacun au moins une plaque de fixation (16) agencée dans un plan longitudinal vertical du châssis de presse,
- au moins une traverse (20), qui s'étend sensiblement horizontalement dans la direction longitudinale du châssis de presse entre les deux montants (10), et qui présente à ses deux extrémités au moins une plaque terminale respective (26), laquelle est en recouvrement avec la plaque de fixation (16) du montant voisin (10), et
- un boulon respectif (30) aux deux extrémités de la traverse (20), lequel est reçu dans des perçages (18, 28) dans la plaque de fixation et la plaque terminale (16, 26) qui se recouvrent mutuellement, et qui relient ces plaques l'une à l'autre de manière articulée,
caractérisé en ce que le perçage (28) de l'une au moins des plaques qui se recouvrent (26) contient une douille (32), laquelle est coiffée sur le boulon (30) après son montage.

2. Châssis de presse selon la revendication 1, caractérisé en ce que la douille (32) est une douille excentrique.

3. Châssis de presse selon la revendication 2, caractérisé en ce que la douille (32) comporte une bride (38), sur laquelle il est possible de poser un outil pour faire tourner la douille, et sur laquelle on peut monter un organe de fixation afin de fixer la douille dans une position angulaire en rotation choisie sur la plaque qui la reçoit (26).

4. Châssis de presse selon l'une des revendications 1 à 3, caractérisé en ce que la douille (32) est recouverte par un couvercle (40).

5. Procédé pour assembler un châssis de presse pour un filtre presse, comprenant :
- deux montants (10), qui sont agencés chacun à une extrémité du châssis de presse et qui comprennent chacun au moins une plaque de fixation (16) agencée dans un plan longitudinal vertical du châssis de presse,
- au moins une traverse (20) qui s'étend sensiblement horizontalement dans la direction longitudinale du châssis de presse entre les deux montants (10) et qui présente à ses deux extrémités au moins une plaque terminale respective (26) qui est en recouvrement avec la plaque de fixation (16) du montant voisin (10), et
- un boulon respectif (30) aux deux extrémités de la traverse (20), lequel est reçu dans des perçages (18, 28) dans la plaque de fixation et la plaque terminale qui se recouvrent mutuellement (16, 26), et qui relient ces plaques l'une à l'autre de façon articulée,
- dans lequel les plaques de fixation (16) des deux montants (10) et les plaques terminales associées (26) de la traverse (20) sont amenées dans leur position en recouvrement dans laquelle leurs perçages sont mutuellement alignés,
caractérisé en ce que :
- les boulons (30) sont passés à travers les perçages associés (18, 28), et au-dessous de ceux-ci dans au moins un perçage (28) prévu pour la réception d'une douille (32), sans que ladite douille (32) ait été mise en place dans ce perçage (28), et
- les douilles (32) sont coiffées uniquement ensuite sur les boulons (30), et alors enfilées dans les perçages associés respectifs (28).
